# EUROPEAN PATENT APPLICATION

(11) **EP 1 783 677 A1**
(43) Date of publication of application: **09.05.2007**
(21) Application number: 05292100.4
(22) Date of filing: 10.10.2005
(51) Int. Cl.: G06Q 30/00

(54) **System and method for ordering prints through automatic PDF conversion**

(71) Applicant: Kim, Jung Ho, Songpa-gu, Seoul (KR)
(72) Inventor: Kim, Jung Ho, Songpa-gu, Seoul (KR); Seong, Soo Young, Songpa-gu, Seoul (KR)
(74) Representative: Joly, Jean-Jacques

(57) **Abstract**

Disclosed herein is a system and method for ordering prints through automatic PDF conversion. The system includes a web server, reception computers, an IBM server and a Mac server, a CMS server, an application server, and item servers. The web server is connected to a customer's computer via the Internet to be provided with order information and to provide printing status information. The reception computers are installed with an IBM operating system and a Mac operating system. The IBM server and the Mac server are adapted to store the order information. The CMS server is connected to financial institutions' servers. The application server provides the order information, examines the image information for abnormalities, stores the image information or provide correction request information, performs a typesetting process, finishes the imposition plate, and assigns a file name to an imposition file. The item servers are configured to convert the image information into PDF files.

## Description

### BACKGROUND OF THE INVENTION

### 1. Field of the Invention

The present invention relates generally to a system and method for ordering prints through automatic Portable Document Format conversion and, more particularly, to a system and method for ordering prints through automatic Portable Document Format conversion, which examines the sizes of large-sized printing files prepared by a customer, automatically converts the printing files into Portable Document Format files if the printing files have no abnormality, and allows a printing process to be performed using the PDF files, so that an entire printing process is performed without being influenced by an operating system or programs used by the customer.

### 2. Description of the Related Art

In general, since printing files prepared by designers are large-sized and the designers utilize a variety of programs to prepare the printing files, it is practically impossible to receive the printing files via the Internet, forward the printing files to necessary processing steps and appropriately process the printing files.

In particular, there exist problems in that an ordering system operated on the Internet is constructed based on the operating system of IBM Corporation, whereas many designers utilize the Mac operating system of Apple Corporation, in which a graphic user interface and windows were implemented earlier than the operating system of IBM Corporation, in a design process for printing files.

Due to the above problems, in a conventional system for ordering prints on the Internet, printing files prepared by customers are not used, but only an editing process, in which customers select and arrange image files uploaded to web sites by webmasters, is performed and then orders are made.

However, since image files provided by webmasters are very limited in type, they cannot fulfill the various demands of customers.

The inventor of the present invention devised the present invention in view of the fact that, if printing files are automatically converted into Portable Document Format (PDF) files, the problem of the large sizes and the problem of processing through the use of different operating systems and programs can be solved.

### SUMMARY OF THE INVENTION

Accordingly, the present invention has been made keeping in mind the above problems occurring in the prior art, and an object of the present invention is to provide a system and method for ordering prints through automatic PDF conversion, which examines the sizes of large-sized printing files prepared by a customer, automatically converts the printing files into PDF files if the printing file have no abnormality, and allows a printing process to be performed using the PDF files, so that an entire printing process is performed without being influenced by an operating system or programs used by the customer.

In order to accomplish the above object, the present invention provides a system for ordering prints through automatic PDF conversion, including a web server connected to a customer's computer via the Internet to be provided with order information, including customer information, operating system type information, printing item information and information about images prepared by a customer, and to provide printing status information in response to the request of the customer's computer; reception computers installed with an IBM operating system and a Mac operating system, respectively, to open and correct the image information of the order information using a program of a corresponding operating system; an IBM server and a Mac server adapted to store the order information in conformity with the operating system type information; a CMS server connected to financial institutions' servers to be provided with money deposit information at regular intervals; an application server configured to provide the order information to the reception computers corresponding to the operating system type information, to store the registered order information in the IBM server and the Mac server in conformity with the operating system type information, to examine the image information corrected in the reception computers for abnormalities, to store the image information in the item servers in conformity with the printing item information if there is no abnormality or provide correction request information to the reception computers if there is any abnormality, to perform a typesetting process in which the file names of PDF files are arranged on an imposition plate if money deposit information is provided, to finish the imposition plate by retrieving the PDF files to typeset locations, assign a file name corresponding to a lot number to an imposition file and provide processing instruction information to processing computers if typesetting completion information is provided, and to receive processing completion information; and item servers configured to convert the image information examined in the application server into PDF files and store the resulting PDF files.

In addition, the present invention provides a method for ordering prints through PDF conversion, including the examination step of examining image information in the application server when order information has been registered in the web server and reception information is provided; the typesetting step of converting examined normal image files into PDF files in the item servers and performing a typesetting process of arranging the names of the PDF files on an imposition plate; the imposition step of retrieving the PDF files from the item servers and arranging the PDF files at typeset locations when the imposition plate has no vacancy; the imposition plate information provision step of providing information about the imposition plate finished at the imposition step, together with processing instruction information, to the item servers; and the processing information provision step of providing the processing status information of the processing computers to the web server.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a conceptual diagram schematically showing the entire configuration of a system for ordering prints;
FIG. 2 is a view showing a printing order page;
FIG. 3 is a view showing a page to which a customer inputs printing specification information;
FIG. 4 is a view showing a reception management page that is provided to the reception computer of the present invention;
FIG. 5 is a view showing a reception page that is provided to the reception computer of the present invention;
FIG. 6 is a view showing a reception page with a download completion item, which is provided to the reception computer of the present invention;
FIG. 7 is a view showing the state in which an image file is opened in the reception computer of the present invention;
FIG. 8 is a flowchart showing a process of examining an image file, which has been prepared using an IBM operating system, in the application server of the present invention;
FIG. 9 is a flowchart showing a process of examining an image file, which has been prepared using a Mac operating system, in the application server of the present invention;
FIG. 10 is a flowchart showing a process of automatically converting an image file, which has been prepared using an IBM operating system, in one of the item servers of the present invention;
FIG. 11 is a flowchart showing a process of automatically converting an image file, which has been prepared using a Mac operating system, in one of the item servers of the present invention;
FIG. 12 is a view showing an imposition management page that is provided to the imposition computer of the present invention;
FIG. 13 is a view showing an imposition plate being typeset that is provided to the imposition computer of the present invention;
FIG. 14 is a view showing a plate combination page that is provided to the imposition computer of the present invention;
FIG. 15 is a flowchart showing a process of selecting remaining imposition plates available for plate combination in the application server of the present invention;
FIG. 16 is a view showing an imposition plate finished using the imposition program of the present invention; and
FIG. 17 is a flowchart showing a process of ordering prints.

### DESCRIPTION OF THE PREFERRED EMBODIMENTS

Reference now should be made to the drawings, in which the same reference numerals are used throughout the different drawings to designate the same or similar components.

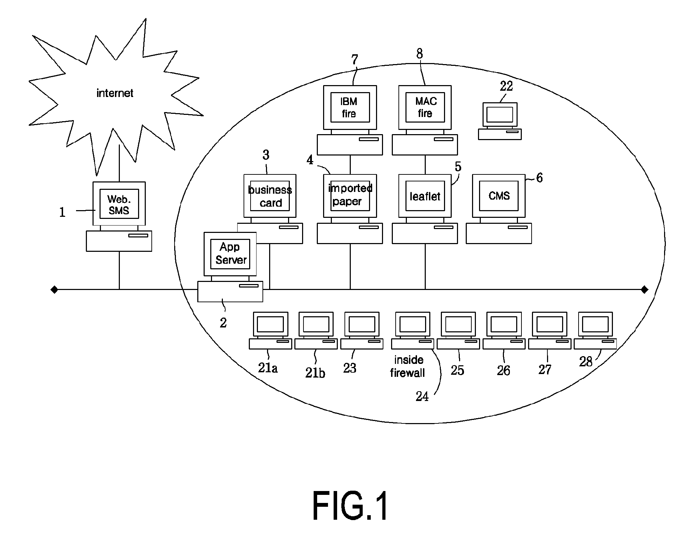

FIG. 1 is a conceptual diagram schematically showing the entire configuration of a system for ordering prints. The system for ordering prints through automatic PDF conversion includes a web server 1, reception computers 21a and 21b, an IBM server 7 and a Mac server 8, a CMS server 6, an application server 2, and item servers.

The web server 1 is connected to a customer's computer via the Internet to be provided with order information, including customer information, operating system type information, printing item information and information about images prepared by a customer, and to provide printing status information in response to the request of the customer's computer. The reception computers 21a and 21b are installed with an IBM operating system and a Mac operating system, respectively, to open and correct the image information of the order information using a program of a corresponding operating system. The IBM server 7 and the Mac server 8 are adapted to store the order information in conformity with the operating system type information. The CMS server 6 is connected to financial institutions' servers to be provided with money deposit information at regular intervals. The application server 2 is configured to provide the order information to the reception computers 21a and 21b corresponding to the operating system type information, to store the registered order information in the IBM server 7 and the Mac server 8 in conformity with the operating system type information, to examine the image information corrected in the reception computers 21a and 21b for abnormalities, to store the image information in the item servers in conformity with the printing item information if there is no abnormality or provide correction request information to the reception computers 21a and 21b if there is any abnormality, to perform a typesetting process in which the file names of PDF files are arranged on an imposition plate if money deposit information is provided, to finish the imposition plate by retrieving the PDF files to typeset locations, assign a file name corresponding to a lot number to an imposition file and provide processing instruction information to processing computers if typesetting completion information is provided, and to receive processing completion information. The item servers are configured to convert the image information examined in the application server 2 into PDF files and to store the resulting PDF files.

The item servers include a business card server 3, an imported paper server 4, and a leaflet server 5.

The processing computers include a film computer 24, a printing computer 25, a cutting computer 26, a packaging computer 27, and a delivery computer 28.

The web server 1 is provided with order information, including customer information, printing item information and image information prepared by a customer, by a customer's computer 10 connected to the web server 1 via the Internet. When the customer logs in on a web site, the web server 1 searches whether an IDentification (ID) and a password exist in a customer database, and provides customer registration information, order reception information and processing status information to the customer in response to the request of the customer's computer 10.

The reception computers are classified into a computer 21a having an IBM operating system and a computer 21b having a Mac operating system. The web server 1 provides order information, which has operating system type information corresponding to the operating system of a specific reception computer 21a or 21b, to the specific reception computer 21a or 21b.

When the order information is registered by the customer's computer 10 via the web server 1, the reception computer 21a or 21b checks necessary points, corrects necessary points, and provides the order information to the application server 2 if there is no abnormality. When the web server 1 receives the order information, the web server 1 stores the order information in either the IBM server 7 or the Mac server 8 in conformity with operating system type information. The application server 2, which has received the reception information, examines the order information for abnormalities, simultaneously stores an image file, which has been corrected by the reception computer 21a or 21b, in one of the item servers and provides reception completion information to the web server 1, and provides correction request information to the reception computer 21a or 21b if the image has an abnormality.

When the reception completion information is provided, the web server 1 transmits a reception completion message to an e-mail address or a mobile phone contained in the customer information.

When money deposit completion information is provided by the CMS server 6, the item servers including the business card server 3, the imported paper server 4 and the leaflet server 5 automatically convert examined image files into PDF files, store the PDF files with a new file name assigned thereto, perform a typesetting process in which an imposition plate is filled with the file names of the PDF files using a typesetting program, perform an imposition process in which the PDF files are retrieved to and positioned on the imposition plate through the running of an imposition program, and assign a finished imposition plate a file number corresponding to a lot number.

The item servers manage information to be stored while keeping the information classified according to printing item information, so that the operation of the system is efficiently performed. The kinds and number of the item servers can be increased and reduced according to the kinds of prints and the amount of information to be stored therein.

The CMS server 6 is connected to financial institutions' servers via dedicated lines or the Internet. The CMS server 6 is provided with money deposit information, and provides the money deposit information, which is transmitted from the financial institutions' servers, to the application server 2 at regular intervals.

The order information is stored in the IBM server 7 or the Mac server 8 in conformity with the operating system information when the reception information is provided by the reception computer 21a or 21b.

The application server 2 provides necessary information to the processing computers, which are connected to the system, within an allowed range, receives processing status information from the processing computers, provides order registration information, order reception information and/or processing status information per processing part in response to the request of the customer's computer 10, and performs typesetting and imposition processes through the running of typesetting and imposition programs.

The accounting computer 22 receives money deposit information from the CMS server 6 connected to financial institutions' servers via dedicated lines or the Internet at regular intervals, checks money deposits by comparing the money deposit information against the order information, and provides money deposit confirmation information to item servers.

The imposition computer 23 checks order information corresponding to money deposit confirmation information, provides typesetting program running information to the application server 2, and provides imposition program running information to the application server 2 after a typesetting process is completed.

The film computer 24 receives processing instruction information, together with an imposition plate file finished by the imposition program, outputs a film using the imposition plate file, and provides film process completion information to the application server 2.

The printing computer 25, the cutting computer 26 and the packaging computer 27 receive processing instruction information, perform their respective processes, and provide processing status information to the application server 2.

The delivery computer 28 provides warehousing confirmation information and delivery confirmation information to the application server 2.

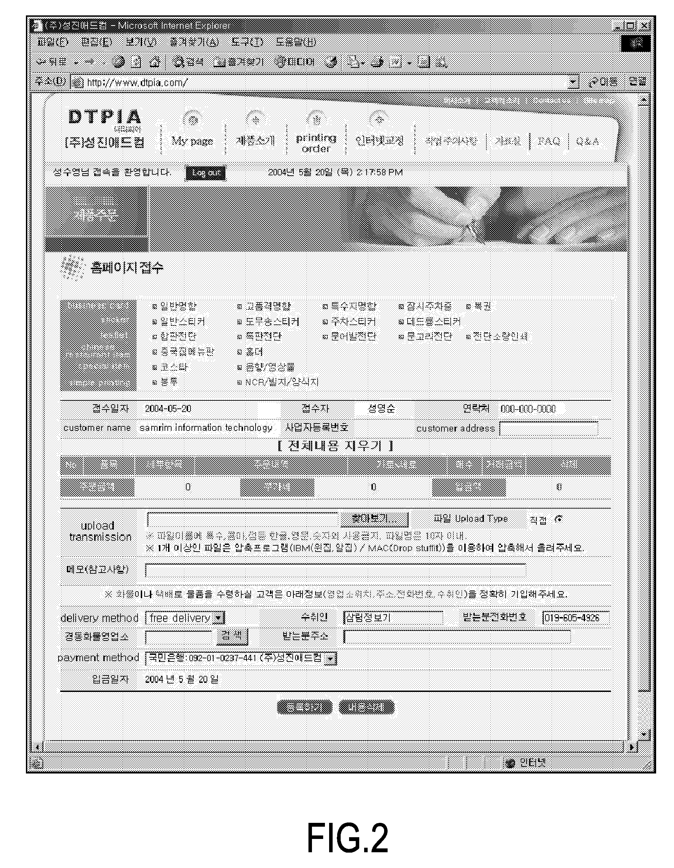

FIG. 2 is a view showing a printing order page that is provided to the customer's computer by the web server 1. The printing order page includes a printing item selection section, a customer information section, an order confirmation section, a customer file attachment section and a delivery and payment type input section.

The customer inputs necessary information, such as printing specification information including printing item information and size information, image information prepared by the customer including operating system information, delivery information, and payment account information.

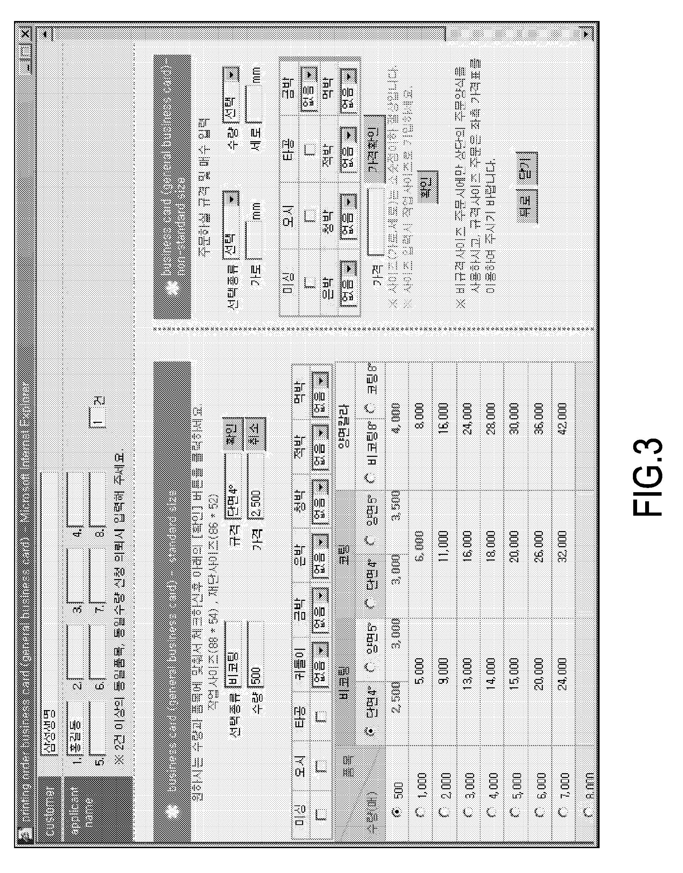

FIG. 3 is a view showing a page that is provided to allow the customer to input the printing specification information, including the operating system type information and the size information, when the customer selects one of the printing items on the printing order page.

When the customer's computer 10 registers the order information, including the operating system type information, the customer information, the printing item information and the image information, in the web server 1, the web server 1 provides the reception computers 21a and 21b with order amount information, together with the order information.

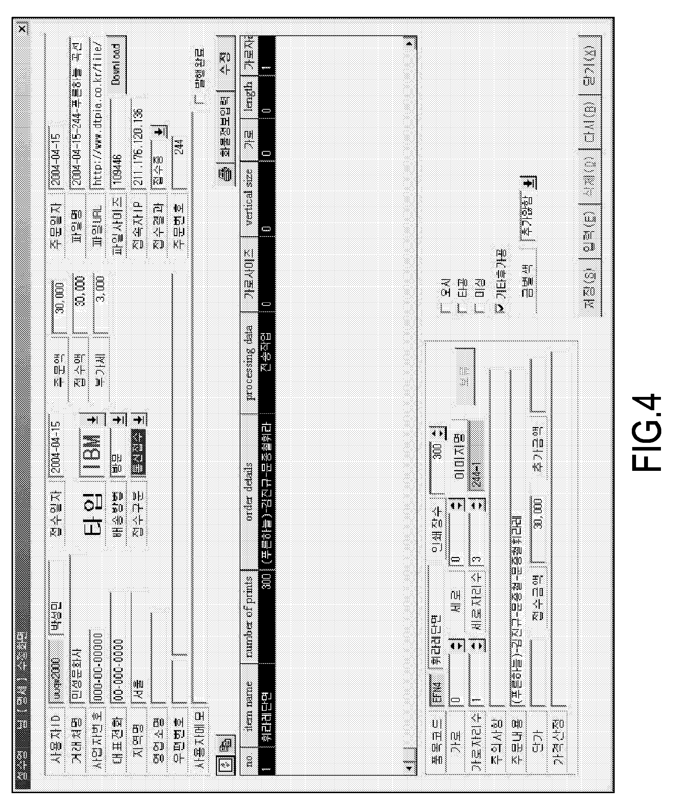

FIG. 4 is a view showing an order management screen provided to the reception computers 21a and 21b.

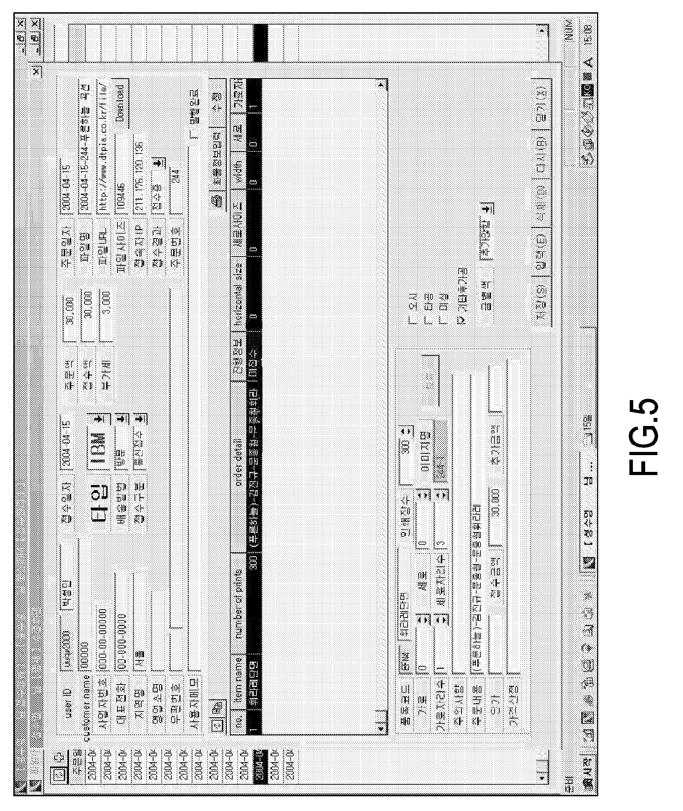

When a receptionist selects an item for which a reception process has not been completed, the reception program of the application server 2 runs and a reception screen shown in FIG. 5 is provided to one of the reception computers 21a and 21b. When there is no abnormality and the receptionist clicks on a download button on the reception screen, image files transmitted by the customer and provided to the web server 1 are stored in the IBM server 7 or Mac server 8 corresponding to operating system type information.

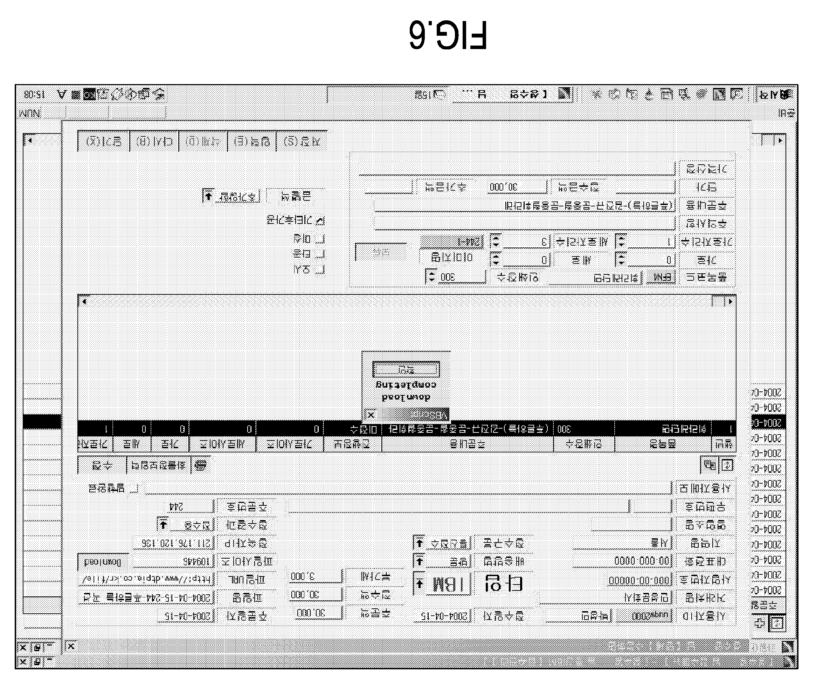

Thereafter, when download completion information is provide by the IBM server 7 or Mac server 8 (when the download completion confirmation button of FIG. 6 is clicked on), the application server 2 opens a stored image file by running one of the programs of the reception computers 21a and 21b corresponding to a file name extension, that is, a program that the customer used.

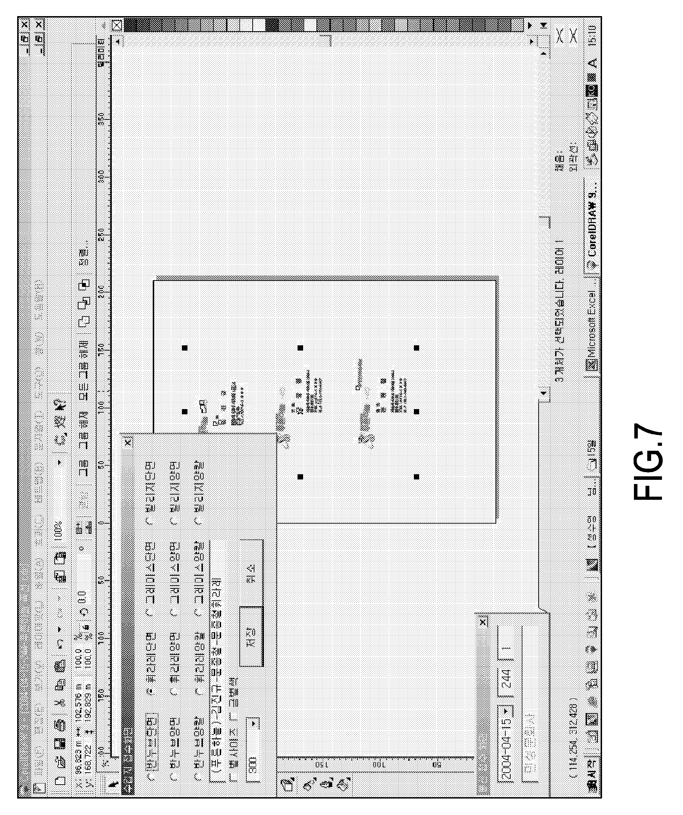

The receptionist checks whether images corresponding to front and rear pages exist, whether an ordered size is consistent with a corresponding image size, whether the opened image file has been bitmap-processed, and whether a paper size is consistent with a corresponding image size, based on the order information and the opened image file provided by the web server 1, as shown in FIG. 7. If there is any inconsistency, the image file is corrected and reception completion information is provided. Thereafter, an image examination program runs and the corrected image file is examined for abnormalities. If there is no abnormality in the corrected image file, the corrected image file is stored in one of the business card server 3, the imported paper server 4 and the leaflet server 5. If there is an abnormality, correction request information is provided to one of the reception computers 21a and 21b.

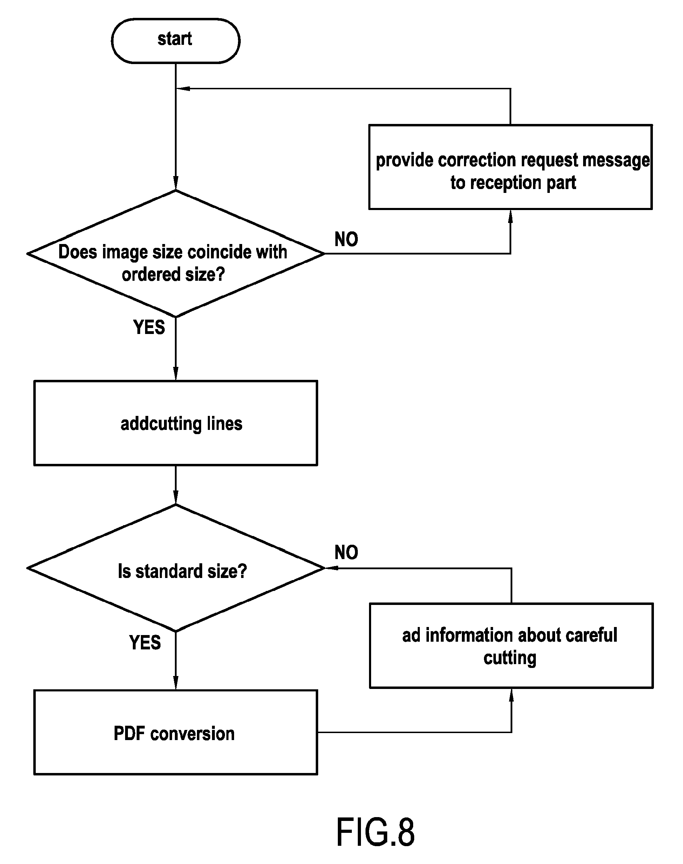

As shown in FIG. 8, a process of examining an image file, which has been prepared using the IBM operating system, in the application server 2 includes the step of determining whether an ordered size coincides with an actual image size by comparing the numbers of horizontal and vertical digits of the image file, which has been corrected in the reception computer 21a, with the numbers of horizontal and vertical digits of an actual image file, the step of providing a correction request message to all the reception computers 21a and 21b if the ordered size does not coincide with the size of the actual image file, the step of providing cutting line information, and the step of determining whether the ordered size is a standard size if the ordered size coincide with the size of the actual image file, and adding cutting line information if the ordered size is the standard size.

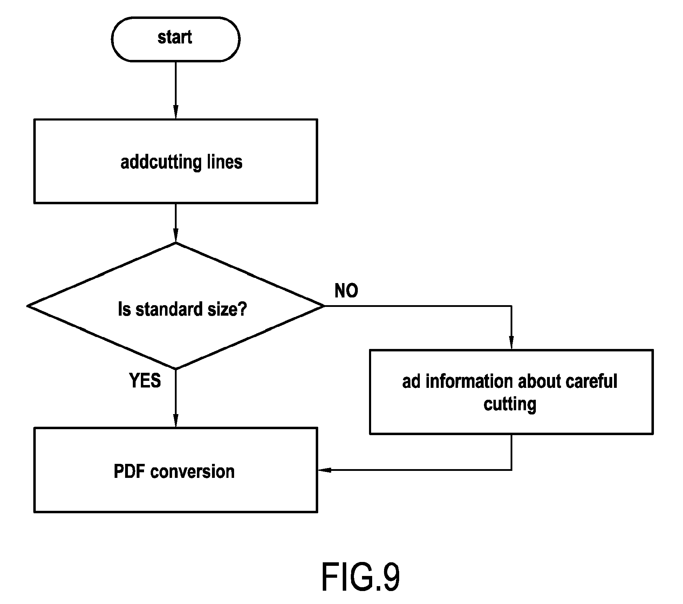

If the operating system type information corresponds to the Mac operating system, a process of examining an image file includes the step of the reception computer 21b providing cutting line information to the corrected image file if the receptionist inputs download completion information, and the step of adding cutting line information if the ordered size input by the customer is not the standard size, as shown in FIG. 9.

The web server 1 provides reception completion or error information, which has been provided by the application server 2, to the customer's computer via a homepage and transmits it to an e-mail address or mobile phone registered as the customer information.

The business card server 3, the imported paper server 4 and the leaflet server 5 automatically convert image files, which have passed the examination process and have been stored, into PDF files.

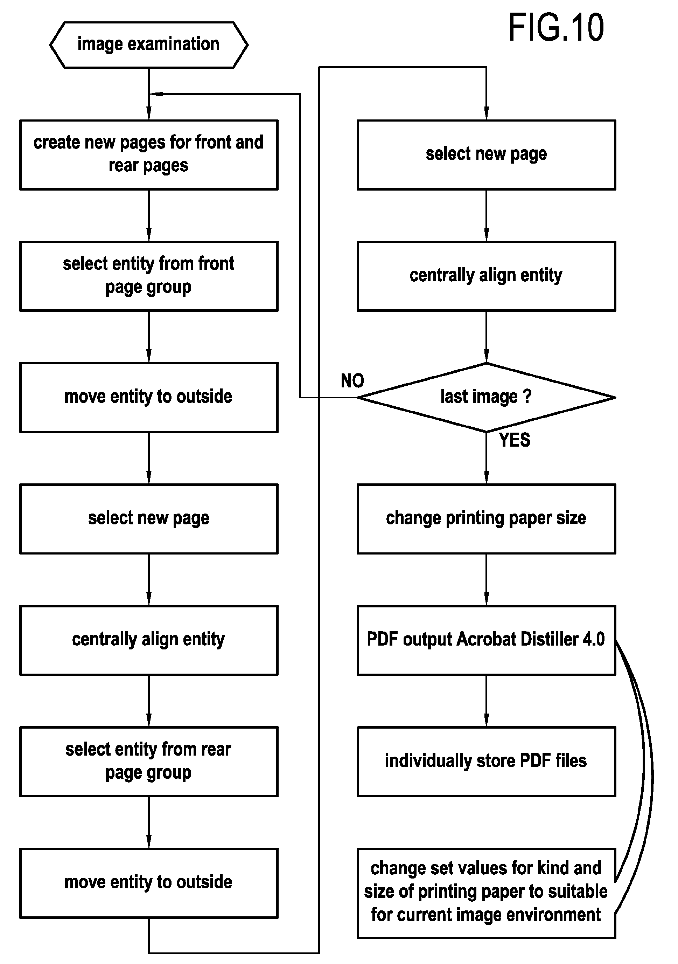

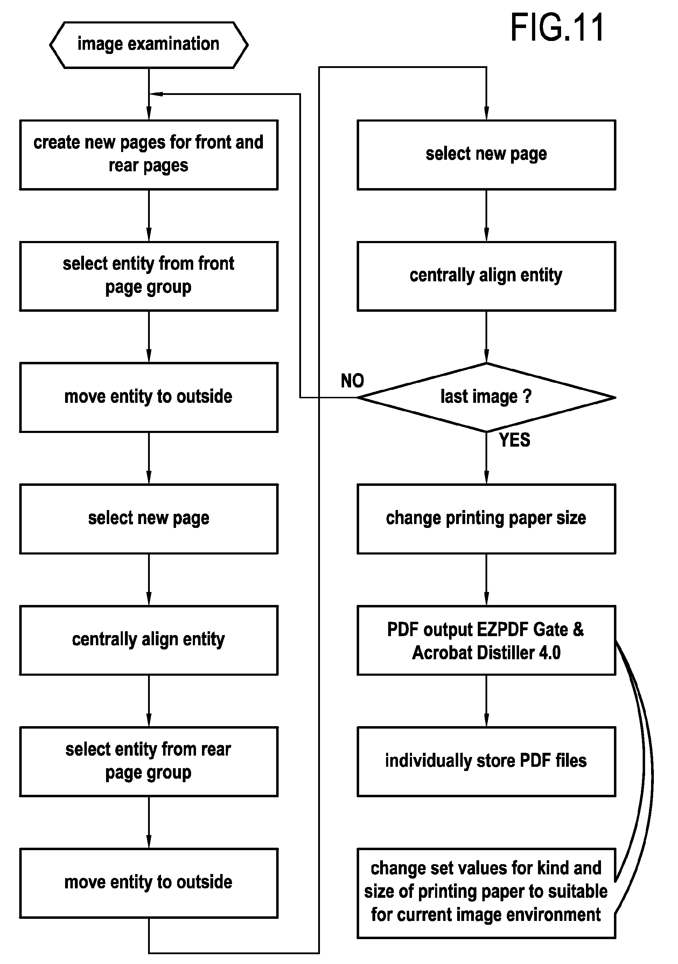

FIGS. 10 and 11 are flowcharts showing processes of examined image information being automatically converted into PDF files. The PDF conversion process includes the step of creating new pages corresponding to the front and rear pages of the image information, the step of selecting one from a group of front entities and moving the selected front entity out of a processing region, the step of centrally aligning the selected front entity on a new page, the step of selecting a rear entity corresponding to the selected front entity and moving out of the processing region, the step of aligning the selected rear entity on another new page, changing set values for the kind of a printer and the size of printing paper in conformity with a current image environment if the entity processed immediately beforehand is the last entity, and the step of converting image files into PDF files through the running of an Acrobat program, and storing the PDF files with new file names assigned thereto.

The file names are assigned to the PDF files to distinguish printing items, reception dates, reception numbers and front and rear images using the reception information.

The CMS server 6 is connected to the financial institutions' servers via dedicated lines or the Internet. The CMS server 6 is provided with money deposit information, and provides the money deposit information, which has been transmitted by the financial institutions' servers, to the application server 2.

The application server 2 provides money deposit information and order information to the accounting computer 22, and the accounting computer 22 checks whether money deposit information corresponding to the order information exists. When money deposit completion information is input to the application server 2 from the accounting computer 22, the typesetting program runs, retrieves the names of PDF files, which correspond to the order information for which money deposits have been confirmed, from corresponding item servers, and locates the names of PDF files on one of the imposition plates that will be classified and produced with respect to items, the numbers of prints, the numbers of printing colors, the qualities of printing paper, and whether coating is required or not.

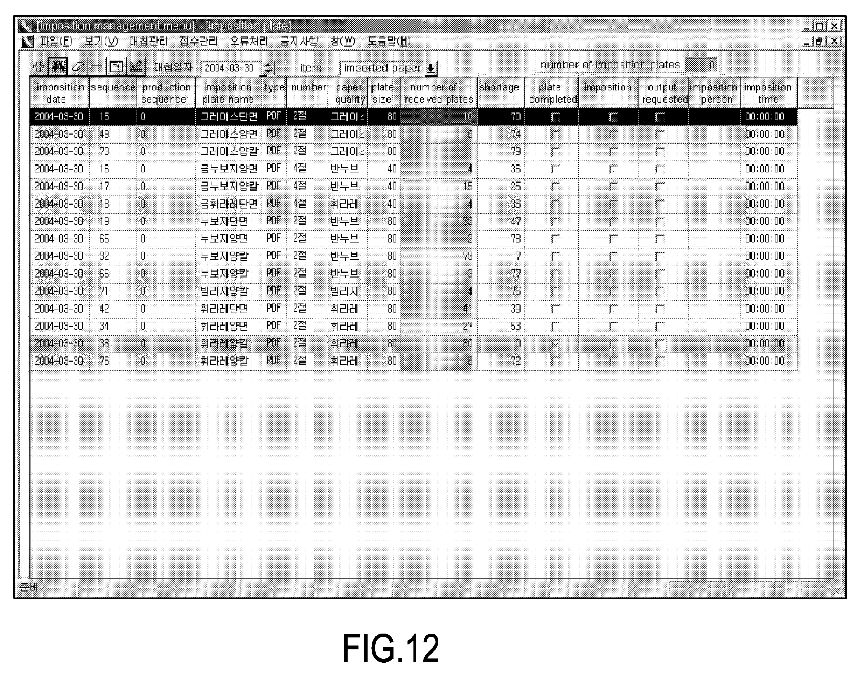

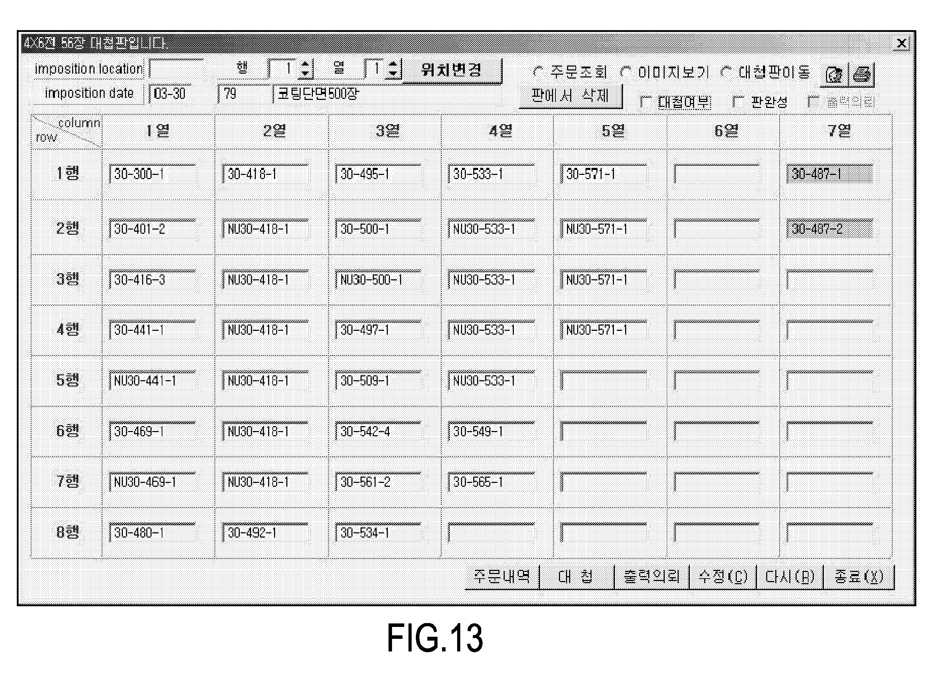

FIG. 12 is a view showing the state in which the status of imposition plates, on which typesetting is performed in response to the money deposit information, is displayed on the imposition computer 23. FIG. 13 is a view showing the state in which a single imposition plate, on which typesetting is being automatically typeset in the web server 1 in response to money deposit completion information provided from the accounting computer 22, is displayed on the imposition computer 23.

When typesetting is completed as the number of files assigned to an imposition plate coincides with the number of received files, the imposition computer 23 provides typesetting completion information to the web server 1. The web server 1 performs an imposition process in which PDF files are retrieved from the corresponding item servers 3, 4 and 5 and are arranged according to typesetting information, and assigns a lot number to the imposition plate. The application server 2 prepares a processing instruction sheet that is being managed using the lot number, and provides the film and printing computers 24 and 25 with the processing instruction sheet, together with a finished imposition file.

In the meantime, when daily reception and money deposits are completed, the imposition computer 23 runs a plate combination program.

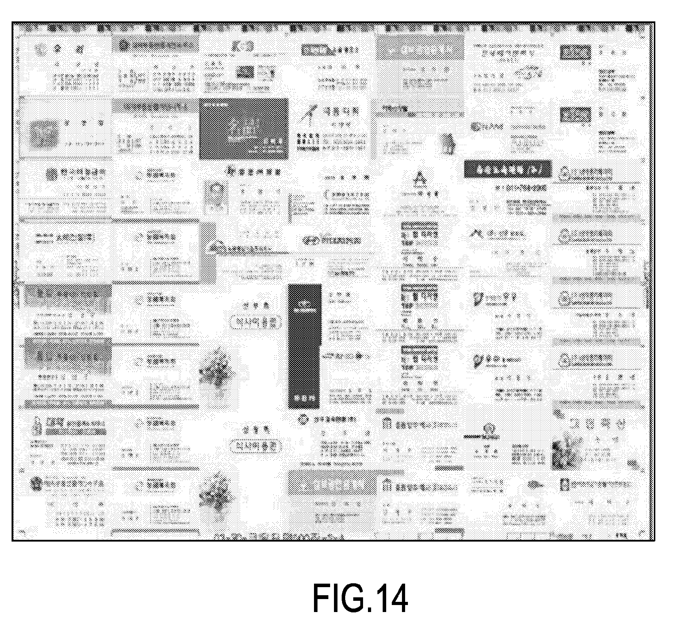

FIG. 14 is a view showing a screen on which the combination of plates is achieved in the imposition computer 23.

When a remaining imposition plate item is selected on the plate combination screen of the imposition computer 23, remaining imposition plates available for the combination of plates are searched for, and displayed on the lower portion of the screen, as shown in FIG. 14. When plate combination information is provided, a plate combination process starts. When plate combination process completion information is provided, an imposition program runs to retrieve PDF files from the item servers and arrange the PDF files on plate combination locations.

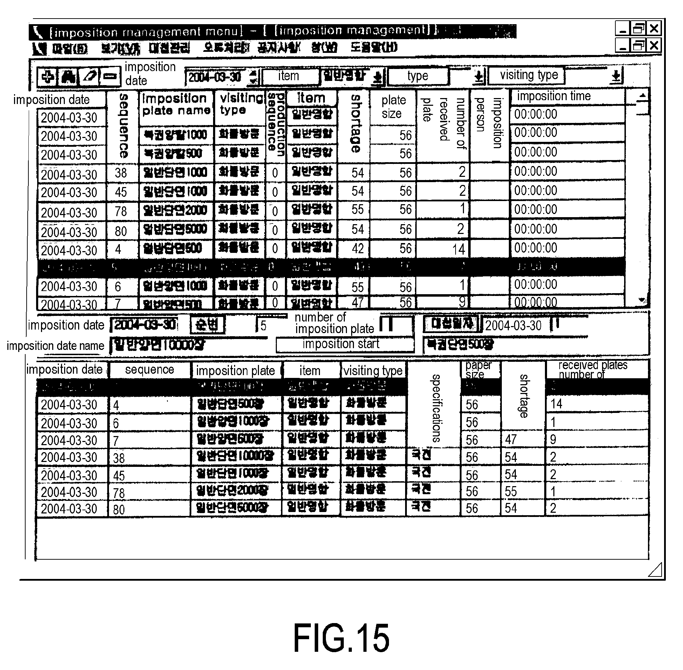

FIG. 15 is a flowchart showing a process of selecting remaining imposition plates available for plate combination. The remaining imposition plate selecting process includes the first step of searching remaining imposition plates that coincide with a selected remaining imposition plate in coating/non-coating item information, the second step of searching the remaining imposition plates, which have been searched at the first step, for remaining imposition plates whose number of printing colors is smaller than that of the selected remaining imposition plate, the third step of searching the remaining imposition plates, which have been searched at the second step, for remaining imposition plates that coincide with the selected remaining imposition plate in paper quality information, and the fourth step of searching the remaining imposition plates, which have been searched at the third step, for remaining imposition plates whose number of pages is smaller than that of the selected remaining imposition plate.

The imposition plates remaining after the plate combining process are carried forward, and the carrying forward information of the imposition computer 23 is transmitted to the customer via the web server 1.

In the case where film and printing processes are performed at a company that is not connected via a one-to-one communication network, processing instruction information and the finished imposition file being managed through the lot number are provided through the server of the company connected to the web server 1 via the Internet.

The processing instruction sheet output in conformity with the processing instruction information is filled in with process specifications about film output, printing, coating and remaining post-processing, the time when processing is instructed, the time when processing is completed, and a processing company.

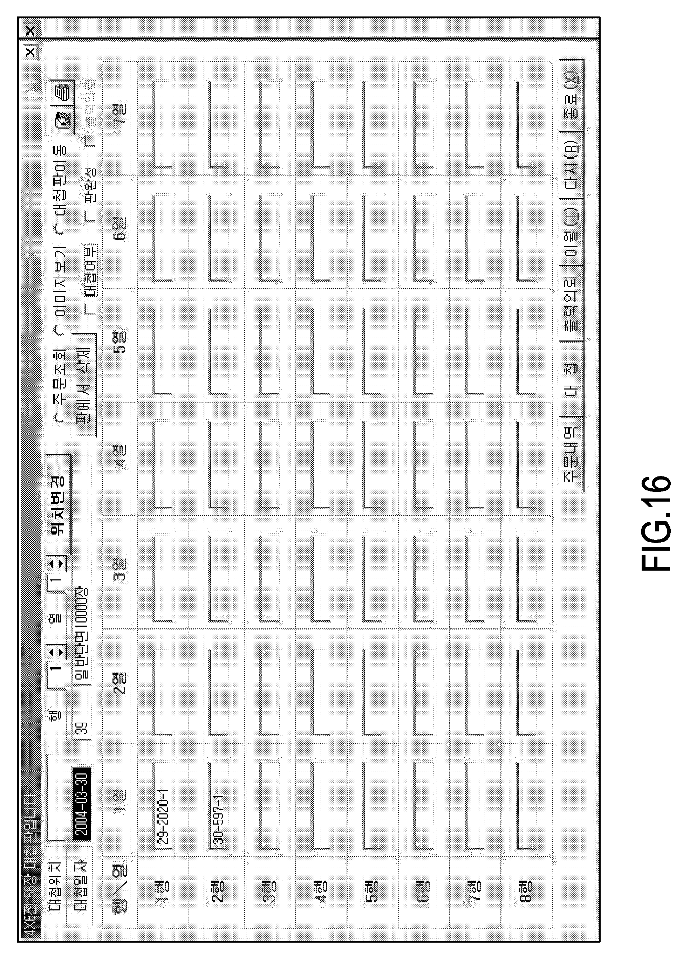

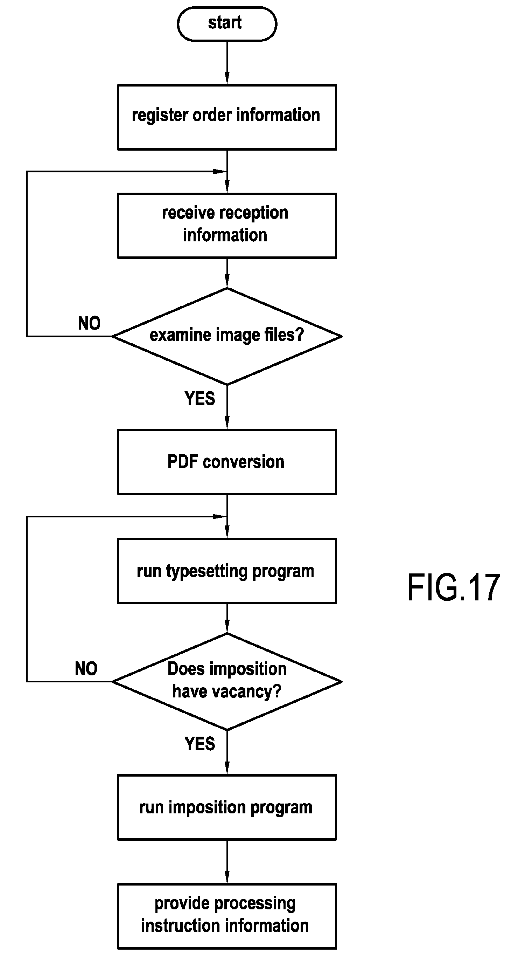

FIG. 16 is a view showing a finished imposition plate. FIG. 17 is a process of ordering printing in accordance with the present invention.

Indications of careful cutting, particularly for non-standard prints, as well as lot numbers and cutting lines are printed on prints processed in the film and printing parts in accordance with the processing instruction sheets, the prints cut along the cutting lines and packaged according to ordered items are warehoused in the delivery part, and the prints are classified and stored according to the lot numbers in the delivery part.

The processing status of the film, printing, cutting and packaging processes is provided to the customer's computer, which is connected to the application server 2 and the web server 1, via the processing computers 24, 25, 26 and 27 in real time.

When the customer connected to the web server 1 receives warehousing completion information, which is provided by the delivery computer 28, and takes the prints, the delivery computer 28 provides delivery completion information to the application server 2, thereby completing the entire process ranging from the order of prints to the delivery thereof.

The customer using the system of the present invention can be provided with information about an entire printing process starting from the reception of an order merely by attaching prepared image information to order information and providing the order information via the Internet.

FIG. 17 is a flowchart showing a process of ordering prints. As shown in this drawing, the print ordering process includes the examination step of examining image information in the application server 2 when printing order information has been registered in the web server 1 and reception information is provided, the typesetting step of converting examined normal image files into PDF files in the item servers and performing a typesetting process of arranging the names of the PDF files on an imposition plate, the imposition step of retrieving the PDF files from the item servers and arranging the PDF files at typeset positions when the imposition plate has no vacancy, the imposition plate information provision step of providing information about the imposition plate finished at the imposition step, together with processing instruction information, to the item servers, and the processing information provision step of providing the processing status information of the processing computers to the web server.

As described above, the present invention provides the system and method for ordering prints through automatic PDF conversion, which examines the sizes of large-sized printing files prepared by the customer, automatically converts the printing files into PDF files if the printing files have no abnormality, and allows a printing process to be performed using the PDF files, so that an entire printing process is performed without being influenced by an operating system or programs used by the customer.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system for ordering prints through automatic Portable Document Format (PDF) conversion, comprising:
a web server connected to a customer's computer via the Internet to be provided with order information, including customer information, operating system type information, printing item information and information about images prepared by a customer, and to provide printing status information in response to the request of the customer's computer;
reception computers installed with an IBM operating system and a Mac operating system, respectively, to open and correct the image information of the order information using a program of a corresponding operating system;
an IBM server and a Mac server adapted to store the order information in conformity with the operating system type information;
a CMS server connected to financial institutions' servers to be provided with money deposit information at regular intervals;
an application server configured to provide the order information to the reception computers corresponding to the operating system type information, to store the registered order information in the IBM server and the Mac server in conformity with the operating system type information, to examine the image information corrected in the reception computers for abnormalities, to store the image information in the item servers in conformity with the printing item information if there is no abnormality or provide correction request information to the reception computers if there is any abnormality, to perform a typesetting process in which the file names of PDF files are arranged on an imposition plate if money deposit information is provided, to finish the imposition plate by retrieving the PDF files to typeset locations, assign a file name corresponding to a lot number to an imposition file and provide processing instruction information to processing computers if typesetting completion information is provided, and to receive processing completion information; and
item servers configured to convert the image information examined in the application server into PDF files and store the resulting PDF files.

2. The system as set forth in claim 1, wherein the application server examines the order information, and transmits reception completion or error information to an e-mail address or a mobile phone of the customer registered via the web server.

3. The system as set forth in claim 1, wherein the application server provides processing status information from the processing computers to the customer's computer via the web server.

4. The system as set forth in claim 3, wherein the processing computers include a film computer, a printing computer, a cutting computer, a packaging computer, and a delivery computer.

5. The system as set forth in claim 3, wherein the processing computers are provided with the processing instruction information of the application information and information about the PDF files via the web server.

6. The system as set forth in claim 1, wherein the application server performs:
the step of comparing numbers of horizontal and vertical digits of an IBM type image file, which has been corrected in one of the reception computers, with numbers of horizontal and vertical digits of each actual image file;
the step of providing cutting line information if an ordered size coincides with the size of the actual image file; and
the step of storing the image file with added indications of careful cutting in one of the item servers if the ordered size is a standard size.

7. The system as set forth in claim 1, wherein the application server performs:
the step of proving cutting line information to a Mac type image file that has been corrected in one of the reception computer; and
the step of storing the image file with added indications of careful cutting in one of the item servers if the ordered size is a standard size.

8. The system as set forth in claim 1, wherein the item servers perform:
the step of creating new pages corresponding to the front and rear pages of the image information;
the step of selecting one from a group of front entities and moving the selected front entity out of a processing region;
the step of centrally aligning the selected front entity on a new page;
the step of selecting a rear entity corresponding to the selected front entity and moving out of the processing region;
the step of aligning the selected rear entity on another new page, changing set values for the type of a printer and the size of printing paper in conformity with a current image environment if the entity processed immediately beforehand is the last entity; and
the step of converting image files into PDF files through the running of an Acrobat program, and storing the PDF files with new file names assigned thereto.

9. The system as set forth in claim 8, wherein the file names are assigned to the PDF files so as to distinguish printing items, reception dates, reception numbers and front and rear images using the reception information.

10. The system as set forth in claim 1, wherein the application server performs:
the first step of searching remaining imposition plates that coincide with a selected remaining imposition plate in coating/non-coating item information;
the second step of searching the remaining imposition plates, which have been searched at the first step, for remaining imposition plates whose number of printing colors is smaller than that of the selected remaining imposition plate;
the third step of searching the remaining imposition plates, which have been searched at the second step, for remaining imposition plates that coincide with the selected remaining imposition plate in paper quality information; and
the fourth step of searching the remaining imposition plates, which have been searched at the third step, for remaining imposition plates whose number of pages is smaller than that of the selected remaining imposition plate.

11. A method for ordering prints through PDF conversion, comprising:
the examination step of examining image information in the application server when order information has been registered in the web server and reception information is provided;
the typesetting step of converting examined normal image files into PDF files in the item servers and performing a typesetting process of arranging the names of the PDF files on an imposition plate;
the imposition step of retrieving the PDF files from the item servers and arranging the PDF files at typeset locations when the imposition plate has no vacancy;
the imposition plate information provision step of providing information about the imposition plate finished at the imposition step, together with processing instruction information, to the item servers; and
the processing information provision step of providing the processing status information of the processing computers to the web server.

12. The method set forth in claim 11, wherein the order information includes information about an operating system under which the image files were prepared.

13. The method set forth in claim 12, wherein the application server provides the order information to one of reception computers having an operating system corresponding to the operating system type information and a program capable of opening the image files.

14. The method set forth in claim 11, wherein, if the order information is determined to have an abnormality at the examination step, correction request information is provided to the reception computer.

15. The method set forth in claim 11, wherein, when the examination step is completed, examination result information is transmitted to a registered e-mail address or mobile phone of the customer via a web server.
